(19) Europäisches Patentamt
European Patent Office
Office européen des brevets

(11) **EP 3 553 657 A1**

(12) **EUROPEAN PATENT APPLICATION**
published in accordance with Art. 153(4) EPC

(43) Date of publication:
**16.10.2019 Bulletin 2019/42**

(51) Int Cl.:
**G06F 9/50** (2006.01)

(21) Application number: **17888669.3**

(22) Date of filing: **13.10.2017**

(86) International application number:
**PCT/CN2017/106110**

(87) International publication number:
**WO 2018/120993 (05.07.2018 Gazette 2018/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.12.2016 CN 201611261962**

(71) Applicant: **Huawei Technologies Co., Ltd.
Longgang District
Shenzhen, Guangdong 518129 (CN)**

(72) Inventors:
• **ZENG, Yan**
  **Shenzhen**
  **Guangdong 518129 (CN)**
• **LIN, Zongfang**
  **Shenzhen**
  **Guangdong 518129 (CN)**
• **ZHU, Guanyu**
  **Shenzhen**
  **Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND DEVICE FOR ALLOCATING DISTRIBUTED SYSTEM TASK**

(57) This application relates to the distributed system field, and in particular, to a resource scheduling technology for a distributed system. In a task assignment method, a share of an assigned resource of a user is obtained, a to-be-assigned task is selected from a to-be-assigned task list, and the to-be-assigned task is assigned, based on a maximum threshold, to a first computing node whose remaining resource can meet the to-be-assigned task. In addition, after the to-be-assigned task is assigned to the first computing node, at least one type of monitored resource of the first computing node meets that an amount of the type of remaining monitored resource is greater than or equal to a maximum threshold corresponding to the monitored resource. According to the solution provided in this application, fewer resource fragments are generated in the distributed system, and resource utilization of the distributed system is increased.

FIG. 3

## Description

This application claims priority to Chinese Patent Application No. 201611261962.8, filed with the Chinese Patent Office on December 30, 2016, and entitled "DISTRIBUTED-SYSTEM TASK ASSIGNMENT METHOD AND APPARATUS", which is incorporated herein by reference in its entirety.

## TECHNICAL FIELD

This application relates to the distributed system field, and in particular, to a resource scheduling technology for a distributed system.

## BACKGROUND

In various distributed computing frameworks (for example, Hadoop and Spark) and various unified distributed-resource management and scheduling platforms (for example, Mesos and YARN), multi-dimensional resource scheduling based on a fine granularity is a core issue of the distributed computing frameworks and the unified distributed-resource management and scheduling platforms. However, during resource scheduling, how to fairly assign resources and increase resource utilization is a key issue and is a hot topic in the field of current distributed-resource management and scheduling technologies.

Currently, some mainstream distributed-resource management and scheduling frameworks such as the Mesos and the YARN all use a DRF (Dominant Resource Fairness, dominant resource fairness) algorithm. A main concept of the algorithm is that resource assignment of a user depends on a dominant share (dominant share) of the user in a multi-dimensional resource environment. The dominant share is a share whose value is the largest among shares of all of a plurality of types of resources that have been assigned to the user, and a resource corresponding to the value is a dominant resource. A main purpose of the DRF algorithm is to attempt to maximize a minimum dominant share among all users or equalize dominant resources of different users as much as possible.

The DRF algorithm ensures user resource fairness, but a resource fragment problem exists in task assignment. That is, after resources are scheduled by using the DRF algorithm, it may occur that a remaining resource of none node can meet a resource requirement of a task, but from a perspective of an entire distributed system, a sum of such type of remaining resource on all nodes is greater than the resource requirement of the task, causing resource fragments. The resource fragment problem leads to a decrease in resource utilization. In addition, because the resource fragments cannot be used, execution of some tasks is delayed, and performance is degraded in terms of time.

## SUMMARY

This specification describes a distributed-system task assignment method, an apparatus, and a system, to reduce resource fragments in a distributed system, increase system resource utilization, and improve task execution efficiency.

According to an aspect, an embodiment of this application provides a distributed-system task assignment method that is based on the DRF algorithm. The method includes: when assignment is performed based on the DRF algorithm, if an amount of a type of monitored resource remaining after the to-be-assigned task is assigned to a computing node to which the to-be-assigned task has been assigned is less than a maximum threshold corresponding to the type of monitored resource, the to-be-assigned task is not assigned to the computing node. This is to ensure that after the to-be-assigned task is assigned to a computing node, the computing node still has a specific amount of remaining resources to execute another task, thereby generating fewer resource fragments.

The monitored resources are resources, in which fragment generation needs to be monitored, in the all types of resources in the distributed system. In a specific embodiment, the monitored resources may be preset or specified by a person. In some other specific embodiments, the monitored resources may be dynamically determined and adjusted by a management system. For example, resource fragment generation is monitored, so as to use a resource in which a lot of resource fragments are generated, as a monitored resource.

In an implementation, the method includes: obtaining a share of an assigned resource of a user, where the share is a percentage of an amount of a type of assigned resource of the user in a total amount of the type of resource assignable in the distributed system, a resource that has a largest share among assigned resources of the user is a dominant resource of the user, and the share corresponding to the dominant resource is a dominant share of the user; selecting a to-be-assigned task from a to-be-assigned task list, where the to-be-assigned task is a task of a user who has a minimum dominant share among the plurality of users; and if the plurality of computing nodes include a first computing node, assigning the to-be-assigned task to the first computing node, where the first computing node is a computing node whose remaining resources can meet an amount of resources required by the to-be-assigned task, and after the to-be-assigned task is assigned to the first computing node, at least one type of monitored resource of the first computing node meets that an amount of the type of remaining monitored resource is greater than or equal to a maximum threshold corresponding to the monitored resource. According to the method, user resource balance is ensured, the foregoing objective of reducing resource fragments is achieved, and resource utilization is increased.

In a possible implementation of the foregoing implementation, the method further includes: if the plurality of computing nodes do not include the first computing node but include a second computing node, assigning the to-be-assigned task to the second computing node, where the second computing node is a computing node whose remaining resources can meet an amount of resources required by the to-be-assigned task, and after the to-be-assigned task is assigned to the second node, at least one type of monitored resource of the second node meets that an amount of the type of remaining monitored resource is less than or equal to a minimum threshold corresponding to the monitored resource, where the minimum threshold is less than the maximum threshold.

In another implementation, the method includes: obtaining a share of an assigned resource of a user, where the share is a percentage of an amount of a type of assigned resource of the user in a total amount of the type of resource assignable in the distributed system, a resource that has a largest share among assigned resources of the user is a dominant resource of the user, and the share corresponding to the dominant resource is a dominant share of the user; selecting a to-be-assigned task from a to-be-assigned task list, where the to-be-assigned task is a task of a user who has a minimum dominant share among the plurality of users; and if the plurality of computing nodes include a first computing node, assigning the to-be-assigned task to the first computing node, where the first computing node is a computing node whose remaining resources can meet an amount of resources required by the to-be-assigned task, and after the to-be-assigned task is assigned to the first computing node, at least one type of monitored resource of the first computing node meets that an amount of the type of remaining monitored resource is greater than or equal to a maximum threshold corresponding to the monitored resource, or an amount of remaining resources is less than or equal to a minimum threshold corresponding to the type of monitored resource, where the minimum threshold is less than the maximum threshold. According to the method, user resource balance is ensured, the foregoing objective of reducing resource fragments is achieved, and resource utilization is increased. In addition, assignment is still performed when an amount of tolerable fragments generated is less than the minimum threshold. This improves task assignment efficiency of the algorithm.

In another implementation, in another implementation, the method includes: obtaining a share of an assigned resource of a user, where the share is a percentage of an amount of a type of assigned resource of the user in a total amount of the type of resource assignable in the distributed system, a resource that has a largest share among assigned resources of the user is a dominant resource of the user, and the share corresponding to the dominant resource is a dominant share of the user; selecting a to-be-assigned task from a to-be-assigned task list, where the to-be-assigned task is a task of a user who has a minimum dominant share among the plurality of users; and if the plurality of computing nodes include a first computing node, assigning the to-be-assigned task to the first computing node, where the first computing node is a computing node whose remaining resources can meet an amount of resources required by the to-be-assigned task, and after the to-be-assigned task is assigned to the first computing node, at least one type of monitored resource of the first computing node meets that an amount of the type of monitored resource is less than or equal to a minimum threshold corresponding to the monitored resource, where the minimum threshold is less than the maximum threshold; or if the plurality of computing nodes do not include the first computing node but include a second computing node, assigning the to-be-assigned task to the second computing node, where the second computing node is a computing node whose remaining resources can meet an amount of resources required by the to-be-assigned task, and after the to-be-assigned task is assigned to the second node, at least one type of monitored resource of the second node meets that an amount of the type of remaining monitored resource is greater than or equal to a maximum threshold corresponding to the monitored resource, where the minimum threshold is less than the maximum threshold. According to the method, user resource balance is ensured, the foregoing objective of reducing resource fragments is achieved, and resource utilization is increased. In addition, assignment is still performed when an amount of tolerable fragments generated is less than the minimum threshold. This improves task assignment efficiency of the algorithm.

In an implementation, the maximum threshold is greater than or equal to an amount of the monitored resources required by at least one to-be-assigned task in a to-be-assigned task list. This ensures that remaining resources obtained each time after assignment is performed can be used to execute at least one to-be-assigned task, thereby generating fewer fragments.

In an implementation, the maximum threshold is greater than or equal to a maximum amount of the type of monitored resource required by all of N unassigned tasks that require smallest amounts of the type of monitored resource in the to-be-assigned task list, where N is an integer that is greater than or equal to 1 and less than or equal to a total quantity of unassigned tasks in the to-be-assigned task list. The N unassigned tasks that require smallest amounts of monitored resources are first N unassigned tasks selected from unassigned tasks according to amounts of the monitored resources required by the unassigned tasks in ascending order. Therefore, the maximum threshold can ensure that remaining monitored resources of the computing node can be used to execute at least one unassigned task, and the largest threshold is as small as possible, so as to improve assignment efficiency.

In an implementation, an amount of any type of remaining monitored resource of the first computing node needs to be greater than or equal to a maximum threshold corresponding to the any type of monitored resource. Therefore, an amount of each type of remaining monitored resource of the first computing node can be greater than the maximum threshold, thereby generating fewer resource fragments in all monitored resources.

In an implementation, the maximum threshold is greater than or equal to a maximum value of maximum amounts of the type of monitored resource required by all groups of at least one group of tasks, where the maximum amount of the type of required monitored resource is a maximum amount of the type of monitored resource required by all tasks in a group of tasks, and the group of tasks are N unassigned tasks in the to-be-assigned task list, where N is an integer greater than or equal to 1. Therefore, the maximum threshold is greater than a maximum amount of monitored resources required by all tasks in a group of tasks. This avoids that, when there are a plurality of types of monitored resources, no computing node meets a threshold corresponding to each of all monitored resources because a threshold of each type of monitored resource is excessively small, and adaptability and efficiency of an algorithm are improved.

In a specific solution of this implementation, a group of tasks are N unassigned tasks that require smallest amounts of any type of monitored resource in the to-be-assigned task list. The N unassigned tasks that require smallest amounts of the monitored resources form a group; therefore, the maximum threshold may be as small as possible while meeting the foregoing requirement, thereby improving efficiency of an algorithm.

In an implementation, the method further includes: obtaining sampling-task data, where the sampling-task data includes resource requirement information of a plurality of tasks; and determining, according to the sampling-task data, a maximum threshold corresponding to at least one type of monitored resource. In this way, the maximum threshold is determined by using the sampling-task data, and different sampling data can be flexibly selected, improving adaptability of an algorithm.

In a specific implementation of this implementation, the maximum threshold is greater than or equal to a maximum value of maximum amounts of the type of monitored resource required by all groups of at least one group of tasks, where the maximum amount of the type of required monitored resource is a maximum amount of the type of monitored resource required by all tasks in a group of tasks, and the group of tasks are N unassigned tasks in sampling tasks, where N is an integer greater than or equal to 1. In a specific implementation, the group of tasks are N unassigned tasks that require smallest amounts of any type of monitored resource in the sampling tasks.

In another specific implementation of this implementation, the method includes: determining that a maximum amount of monitored resources Y required by a smallest task set corresponding to a monitored resource X is a maximum threshold corresponding to the monitored resources Y, where the monitored resource X is any type of monitored resource, the monitored resources Y are monitored resources for which the corresponding maximum threshold is to be determined, the smallest task set corresponding to the monitored resource X includes M tasks in the sampling-task data that require smallest amounts of the monitored resources X, and a maximum amount of the monitored resources Y required by all tasks in the smallest task set is a maximum amount of the monitored resources Y required by the smallest task set, where M is a positive integer greater than or equal to 1; or determining that a maximum value of maximum amounts of the monitored resources Y required by a plurality of smallest task sets corresponding to a plurality of types of monitored resources is a maximum threshold corresponding to the monitored resources Y. In this way, the maximum threshold is determined according to the M tasks in the smallest task set, to ensure that an amount of each type of remaining monitored resource is greater than or equal to the maximum threshold, and the M tasks can be executed.

In an implementation, the method further includes: obtaining at least one piece of sampling-task update data, where the sampling-task update data includes resource requirement information of a task executed within a preset period of time; and updating, according to the sampling-task update data, a maximum threshold corresponding to at least one type of resource. In this way, the sampling data can be updated, so as to update the maximum threshold and improve task assignment accuracy.

In an implementation, the method further includes: if no first computing node exists, reducing the maximum threshold.

In an implementation, the method further includes: if neither the first computing node nor the second node exists, reducing the maximum threshold.

In an implementation, the method further includes: selecting a to-be-assigned task from a to-be-assigned task list, where if there are no to-be-assigned tasks in the to-be-assigned task list except the selected to-be-assigned task, a computing node, of the plurality of computing nodes, whose remaining resource can meet the selected to-be-assigned task is a computing node to which the selected to-be-assigned task can be assigned. Therefore, if the to-be-assigned task is the last task in the to-be-assigned task list, resource fragments are no longer considered, improving assignment efficiency.

According to another aspect, an embodiment of the present invention provides a management node, where the node has functions for implementing the foregoing method. The function may be implemented by using hardware, or may be implemented by executing corresponding software by the hardware. The hardware or software includes one or more modules that correspond to the foregoing functions.

In a possible implementation, a structure of the management node includes a processor, a memory, and a network interface, where the processor is configured to support the management node in implementing corresponding functions in the method. The network interface is configured to communicate with a user or a computing node, to obtain external information in the foregoing method. The memory is configured to be coupled to the memory and store a program instruction and data necessary for a base station.

According to still another aspect, an embodiment of the present invention provides a distributed system, where the system includes the management node according to the foregoing aspect and a computing node configured to provide required resources for to-be-assigned tasks of a plurality of users to execute the to-be-assigned tasks.

According to yet another aspect, an embodiment of the present invention provides a computer storage medium, configured to store a computer software instruction used by the foregoing management node, and the computer software instruction includes a program designed for executing the foregoing aspects.

Compared with that in the prior art, in the embodiments of the present invention, fewer resource fragments are generated in task assignment in a distributed system, thereby increasing resource utilization and improving system execution efficiency.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other implementations from these accompanying drawings without creative efforts. All of the embodiments or the implementations shall fall within the protection scope of the present invention.

FIG. 1A is a schematic diagram of a possible application scenario according to the present invention;
FIG. 1B is a system architecture diagram of a possible application scenario according to the present invention;
FIG. 1C is a system architecture diagram of another possible application scenario according to the present invention;
FIG. 1D is a system architecture diagram of still another possible application scenario according to the present invention;
FIG. 1E is a system architecture diagram of still another possible application scenario according to the present invention;
FIG. 2 is a schematic flowchart of a DRF algorithm;
FIG. 3 is a flowchart of a method according to an embodiment of the present invention;
FIG. 4 is a flowchart of a method according to another embodiment of the present invention;
FIG. 5 is a flowchart of a method according to another embodiment of the present invention;
FIG. 6 is a flowchart of a method according to another embodiment of the present invention;
FIG. 7 is a logical structure diagram of a management node according to an embodiment of the present invention; and
FIG. 8 is a hardware structure diagram of a management node according to an embodiment of the present invention.

## DESCRIPTION OF EMBODIMENTS

To make the objectives, technical solutions, and advantages of the present invention clearer, the following further describes implementations of the present invention in detail with reference to the accompanying drawings.

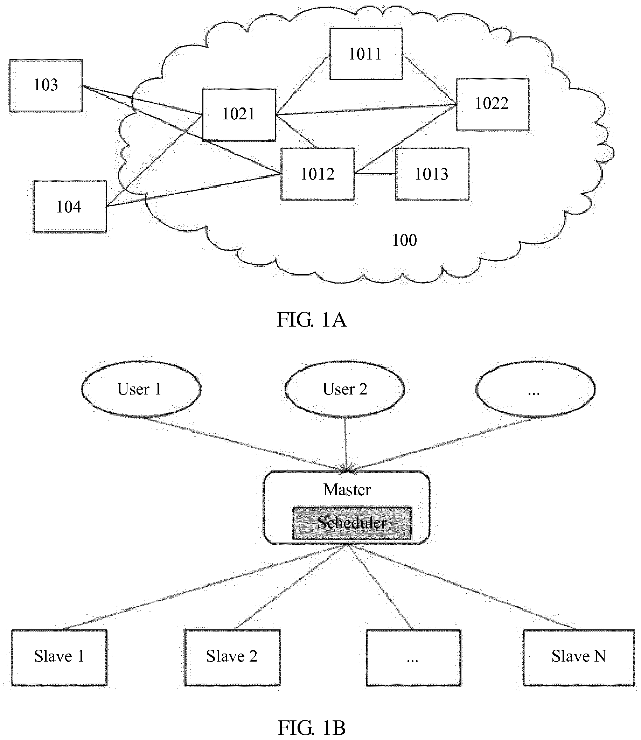

Referring to FIG. 1A, FIG. 1A is a schematic diagram of a system of a possible implementation scenario according to an embodiment of the present invention. FIG 1A is a simplified diagram of a distributed system 100 including one or more interconnected computing devices. Three types of devices are displayed: a computing device, a management device, and a client and server. A device quantity and type are merely used as an example, and are not crucial to the present invention.

Hosts such as hosts 1011, 1012, and 1013 are shown. A host may be a computing device. In addition to other functions, the computing device provides one or more services for another computing device. For example, a host may be a server in an enterprise network, a database, or any other device that provides data and/or a service for another computing device.

FIG. 1A further shows a plurality of management devices in the system 100. For brevity, two management devices, that is, a management device 1021 and a management device 1022 are shown. The management devices may perform different functions, including but not limited to controlling a user task to be executed by using a resource provided by a computing device.

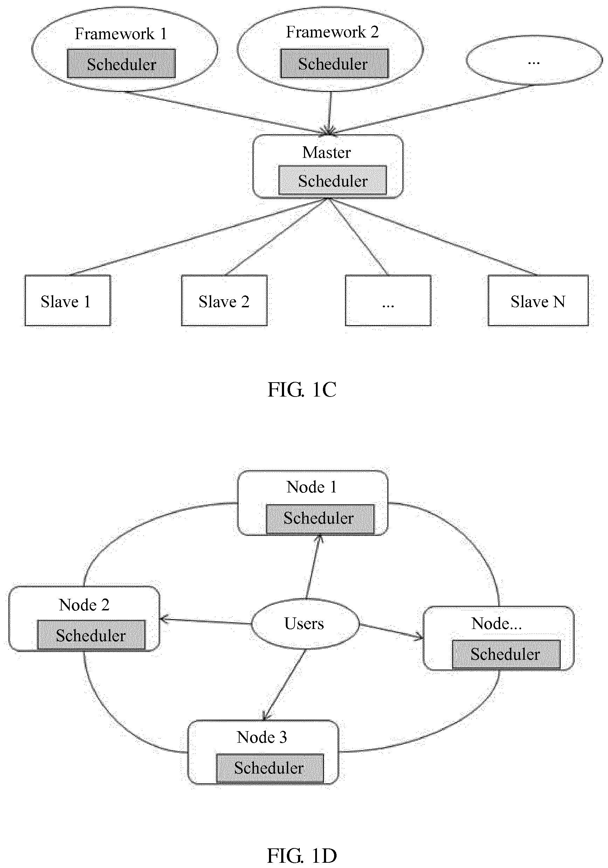

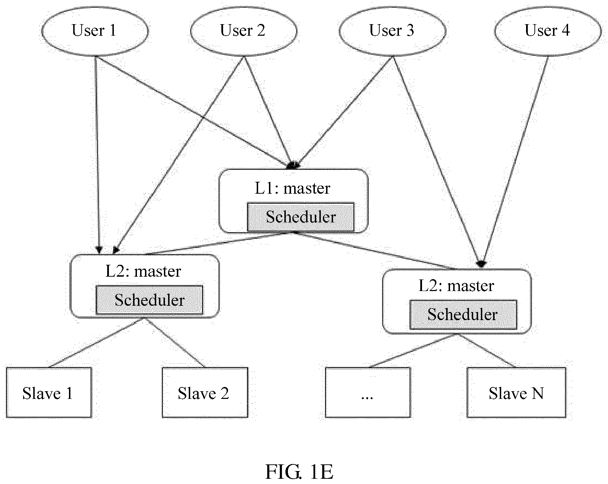

Based on FIG. 1A, the following describes, by using FIG. 1B, FIG. 1C, FIG. 1D, and FIG. 1E as examples, several types of common system architectures of distributed systems to which the embodiments of the present invention are applied.

FIG. 1B is a schematic architecture diagram of a centralized one-tier architecture distributed system. In this architecture, a user (a user 1, a user 2, ...) submits a task to a master node (master), and the master node performs scheduling and assignment for the task by using a scheduler (scheduler) to assign a required resource to the task, so as to assign the task to a slave node (a slave 1, a slave 2, ..., or a slave N) that meets the resource required by the task. In this architecture, the management node that performs this embodiment of the present invention is the master node in this architecture. Specifically, the scheduler performs the method in this embodiment of the present invention.

FIG. 1C is an architecture diagram of a centralized distributed system in a two-tier architecture scenario. In this architecture, a master node assigns resources to a plurality of frameworks (framework). A framework is used to resolve or handle a complex problem. For example, the framework may be a big data processing framework Hadoop or a batch processing framework Spark. In a possible scheduling manner in this architecture, a framework informs the master node of total resources required by a plurality of tasks required by the framework, the master node assigns corresponding resources to the framework, and the framework then performs second-level scheduling (assigns the resources to the tasks). In this scenario, the management node that performs this embodiment of the present invention is the master node in this architecture. Specifically, the method in this embodiment of the present invention is performed by a scheduler (Scheduler) in the master node. In another possible scheduling manner in this architecture, the master node informs a framework of an idle resource in a manner of an idle write-resource list, and the framework selects a resource and assigns the resource to a task. In this scenario, the present invention is performed by a scheduler (Scheduler) in the framework.

FIG. 1D shows a decentralized architecture of a distributed system. In the decentralized architecture, the distributed system includes a plurality of nodes (a node 1, a node 2, a node 3 ...), and each node runs highly independently. The nodes may be freely connected to each other to form a new connection unit. Any node may become a center at a stage, but does not have a mandatory central control function. Therefore, when a node has a scheduling function at a stage and may assign a task submitted by a user (user), the management node that performs this embodiment of the present invention is the node. Specifically, the method in this embodiment of the present invention is performed by a scheduler (Scheduler) in the node. It can be understood that in FIG. 1D, only one user is used as an example for description, but in an actual architecture, a plurality of users may be connected to a distributed system simultaneously in a similar way to schedule and execute tasks.

FIG. 1E shows a distributed system of a cluster federation architecture. In this architecture, there are a plurality of layers of master nodes. A master node at L1 (L1: master) may schedule tasks of users (a user 1, a user 2, a user 3, and a user 4) to a master node at L2 (L2: master). In this case, for the master node at L1, a computing node is a set of total resources of all subnodes under each master node at L2. The master node at L2 may perform scheduling again on the assigned tasks, to assign the tasks to specific subnodes (a slave 1, a slave 2, ..., and a slave N). For the master node at L2, a computing node is a resource set of all subnodes or a plurality of resource sets of all subnodes (for this, refer to the following computing node division principle). Alternatively, a user may schedule the tasks directly by using the master node at L2. In this architecture, the management node that performs this embodiment of the present invention is a master node at each tier. Specifically, the method in this embodiment of the present invention is performed by a scheduler (Scheduler) in the node.

In the foregoing a plurality of architectures, the scheduler may be a hardware device integrated on a related node, or may be implemented by general purpose hardware of a node by using software. In this embodiment of the present invention, a specific manner of implementing a function of the scheduler by a management node is not limited. In addition, in this embodiment of the present invention, the user may be a client, or a service framework.

Resource scheduling described in this embodiment of the present invention is to assign a resource of a computing node in a distributed system to a to-be-assigned task of a user. It should be noted that in various embodiments of the present invention, the computing node is a resource set used as a resource scheduling unit in the distributed system. Generally, the computing node may be one or more servers or one or more physical computers. However, in some scenarios, for different types of resources, a computing node may be obtained according to a different division unit. For example, when a CPU is used as a monitored resource, a processor or a processing core may be used as a division unit. In this case, each processor or processing core in the distributed system is used as a computing node, and a server may include a plurality of computing nodes. For another example, when only a storage resource is used as a monitored resource, a data fragment may be used as a division unit for a computing node. In this case, one data fragment in a distributed database is used as one computing node, and one server may include a plurality of data fragments, that is, include a plurality of computing nodes.

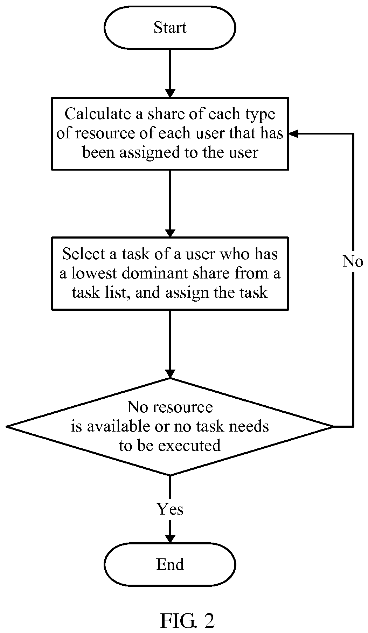

Based on an existing DRF algorithm, improvement is made in this embodiment of the present invention; therefore, unless otherwise specified, a method and concept in the existing DRF algorithm are applicable to this embodiment of the present invention. Referring to FIG. 2, an algorithm procedure of the existing DRF algorithm is briefly described in FIG. 2.

FIG. 2 shows specific steps of assigning resources by using the DRF algorithm:

(1) Calculate a share (share) of each type of resource of each user that has been assigned to the user, where the share is a percentage of an amount of the type of resource in an amount of total resources in a distributed system; and select, based on a share of each resource of a user, a maximum share as a dominant share (dominant share) $S_i$ of the user:

$$s_i = \max_{j=1}^{m}\{u_{ij} / r_j\},$$

where $u_{ij}$ represents an amount of resources j occupied by a user i, $r_j$ represents a total amount of resources j, and m represents a total of resource types.
(2) Each time after a task of a user that has a minimum dominant share is selected from a task list to run, if a system has sufficient available resources to execute the task, start the task for running.
(3) Repeat step (1) and step (2) until no resource is available or no task that needs to be executed.

A main purpose of the DRF algorithm is to attempt to maximize a minimum dominant share among all users or equalize dominant shares of different users as much as possible. For example, assuming that a user A starts a CPU-intensive task and a user B starts a memory-intensive task, the DRF algorithm is used to attempt to balance between a CPU resource share of the user A and a memory resource share of the user B.

The DRF algorithm is improved in this embodiment of the present invention. Each time after a task of a user that has a minimum dominant share is selected from a task list, the task is not directly assigned to any node whose remaining resource meets the task, but a maximum threshold is introduced. A relationship between a remaining resource of the node to which the task has been assigned and the maximum threshold is used to determine whether the task can be assigned to the node. A task is assigned to only an appropriate node to reduce a possibility that the node generates a fragment after the task is assigned.

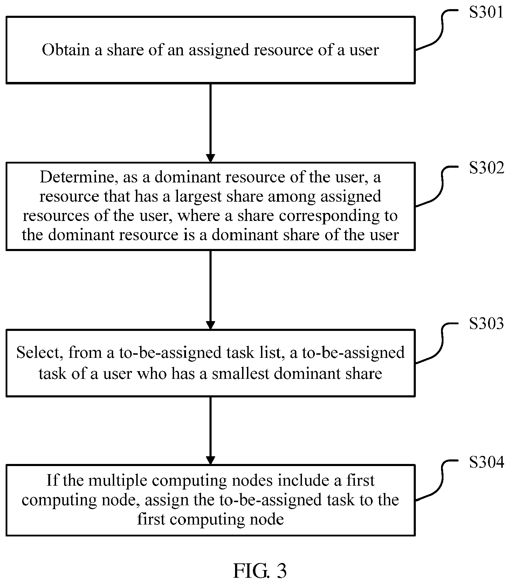

FIG. 3 is a flowchart of a method according to an embodiment of the present invention. The method includes the following steps.

S301. Obtain a share of an assigned resource of a user.

A share is a percentage of an amount of a type of assigned resource of a user in a total amount of resources in a distributed system. The assigned resources are all types of resources occupied by tasks that have been assigned to the user. The resources are all types of system resources in the distributed system, and include but are not limited to a processor resource, a memory resource, a storage resource, a network bandwidth resource, a GPU acceleration resource, and the like.

In a specific implementation, a share of each type of resource occupied by the user may be obtained, or only shares of several types of particular resources may be determined. To determine a share of a type of resource, an amount of the type of resource occupied by an assigned task of the user and a total amount of the type of resource in the distributed system need to be known. In a possible implementation, each server or computing node in the distributed system reports a total amount of assignable resources and an amount of resources that have been assigned to the user, so that a control device can collect statistics on an amount of the type of resource occupied by an assigned task of each user and a total amount of the type of resource in the distributed system. In another possible implementation, a control node stores data about a total amount of available resources in the distributed system, and an amount of resources assigned to each user is recorded each time after a task is assigned, so as to directly store an amount of the type of resource occupied by an assigned task of each user and information about a total amount of the type of resource in the distributed system.

S302. Determine, as a dominant resource of the user, a resource that has a largest share among assigned resources of the user, where a share corresponding to the dominant resource is a dominant share of the user.

The assigned resources of the user are assigned resources whose shares have been obtained in the foregoing step. That is, in a specific embodiment, if a share of each type of resource occupied by the user is obtained, the dominant resource is a resource that has a largest share among assigned resources; or if shares of several types of particular resources are obtained, the dominant resource is a resource that has the largest share among the several types of particular resources.

In a specific implementation, step S301 and step S302 may be performed for a plurality of times to determine dominant shares of a plurality of users. It can be understood that, for the plurality of users, because dominant resources of different users are different, dominant shares of the plurality of users may correspond to different resources.

S303. Select, from a to-be-assigned task list, a to-be-assigned task of a user who has a minimum dominant share.

The to-be-assigned task list is a data structure that stores information about tasks that need to be executed in the distributed system. Information about each task includes an amount of all types of resources required by the task. The to-be-assigned task is a task that needs to be executed in the distributed system but has not yet been assigned to a computing node in the distributed system, that is, a task to which no resources have been assigned. In an implementation, the to-be-assigned task list may be divided into different sub-lists according to different users, and each sub-list includes all tasks of the user that need to be executed in the distributed system. In another implementation, the information about each task in the to-be-assigned task list further includes user information of the task, so as to distinguish between tasks of different users based on user information. In addition, the to-be-assigned task list may store only unassigned tasks, and a task is removed from the list after being assigned. Alternatively, assigned and unassigned tasks in the to-be-assigned task list may be distinguished with different marks, and the assigned tasks do not need to be removed.

The task of the user who has the minimum dominant share is selected from the to-be-assigned task list. Above all, the dominant share of the user is determined, and a user who has a largest dominant share may be determined according to the determined dominant share. The task of the user who has the minimum dominant share is the to-be-assigned task to be selected.

Generally, one user may have a plurality of tasks in the to-be-assigned task list. In this embodiment, no limitation is imposed on selection of a specific task of the user. In a possible implementation, selection may be performed according to different preset rules. For example, a task with a largest priority among the plurality of tasks of the user may be selected, or tasks that enter the list first in chronological order or in enqueuing order are selected in sequence, or a task that occupies a largest or smallest amount of resources is selected.

S304. If the plurality of computing nodes include a first computing node, assign the to-be-assigned task to the first computing node, where the first computing node is a computing node whose remaining resources can meet an amount of resources required by the to-be-assigned task, and after the to-be-assigned task is assigned to the first computing node, at least one type of monitored resource of the first computing node meets that an amount of the type of remaining monitored resource is greater than or equal to a maximum threshold corresponding to the monitored resource.

The first computing node is a computing node that meets the foregoing condition among all or some computing nodes in the distributed system. In a possible implementation, some computing nodes of all nodes in the distributed system may be first determined according to a current user or task or other factors, and then a computing node of the some nodes that meets the foregoing condition is determined as the first computing node.

An amount of remaining resources of a computing node is a current total amount of each type of assignable resource of the node, that is, an amount of remaining resources obtained by subtracting an amount of each type of assigned resource from an amount of the type of assignable resource of the node. An amount of resources remaining after the to-be-assigned task has been assigned is an amount of remaining resources obtained by subtracting an amount of a type of resource required by the to-be-assigned task from an amount of the type of remaining resource.

That the remaining resource of the computing node can meet the to-be-assigned task means that an amount of each current type of assignable resource is greater than an amount of each type of resource required by the to-be-assigned task. After the to-be-assigned task is assigned to the computing node, an amount of at least one type of remaining monitored resource is greater than or equal to a corresponding maximum threshold. This means that an amount of remaining resources obtained by subtracting an amount of one or more types of particular resources required by the to-be-assigned task from a current amount of one or more types of particular assignable resources among all current types of assignable resources of the computing node is greater than or equal to a corresponding threshold. The monitored resources are the one or more types of particular resources. The monitored resources may be one or more types of particular resources specified by a person in a preset manner, to ensure that an amount of the remaining monitored resources is greater than a threshold in a task assignment process and control a fragmentation degree of the monitored resources.

Alternatively, in a possible implementation, for monitored resources, a range of the monitored resources may be dynamically adjusted by a management node in the distributed system or a node having a similar function according to a resource fragment status or a resource load status of each node in the distributed system. For example, when a type of resource in a system has resource fragments in many nodes, the type of resource is adjusted as a monitored resource. For another example, when a type of resource needs to be assigned to most tasks in a task list, a possibility of generating fragments is relatively high because the type of resource is scheduled frequently, and the type of resource is adjusted as a monitored resource.

In a possible implementation, the maximum threshold may be pre-configured by a person. A maximum threshold corresponding to a monitored resource is configured according to a factor such as historical data or a user task requirement, so that a remaining monitored resource whose amount is higher than a maximum threshold may very likely to meet a subsequent task requirement, and fewer fragments are generated. In some other possible implementations, a maximum threshold may be calculated according to historical data or a resource requirement of an unassigned task. For a specific manner, refer to a subsequent embodiment.

In this embodiment, an amount of at least one type of remaining monitored resource needs to meet the foregoing condition. That is, for the foregoing resources of the monitored resources, in some specific implementations, provided that one type of or several types of particular monitored resources of the node meets the foregoing condition, the node is the first computing node; or provided that an amount of types of monitored resources of the node reaches a preset amount (one type or several types) in the foregoing condition, the node is a computing node to which a task can be assigned; or provided that all monitored resources of the node meet the foregoing condition, the node may be a computing node to which a task can be assigned.

A to-be-assigned task may be assigned to the first computing node after a corresponding first computing node is determined for each to-be-assigned task, that is, after the task is assigned to the computing node; or after a corresponding first computing node is determined for each of a plurality of to-be-assigned tasks, the plurality of tasks are respectively assigned to the first computing nodes corresponding to the plurality of tasks. When there are a plurality of first computing nodes corresponding to the plurality of tasks, one node is selected from the plurality of computing nodes for task assignment. Another factor such as node load may be considered in selection, and no details are described in this embodiment.

In this embodiment, assignment of one to-be-assigned task may be completed by performing step S301 to step S304. In a specific implementation, based on an idea of this embodiment, all or some steps may be repeated to assign a task in the to-be-assigned task list to a computing node.

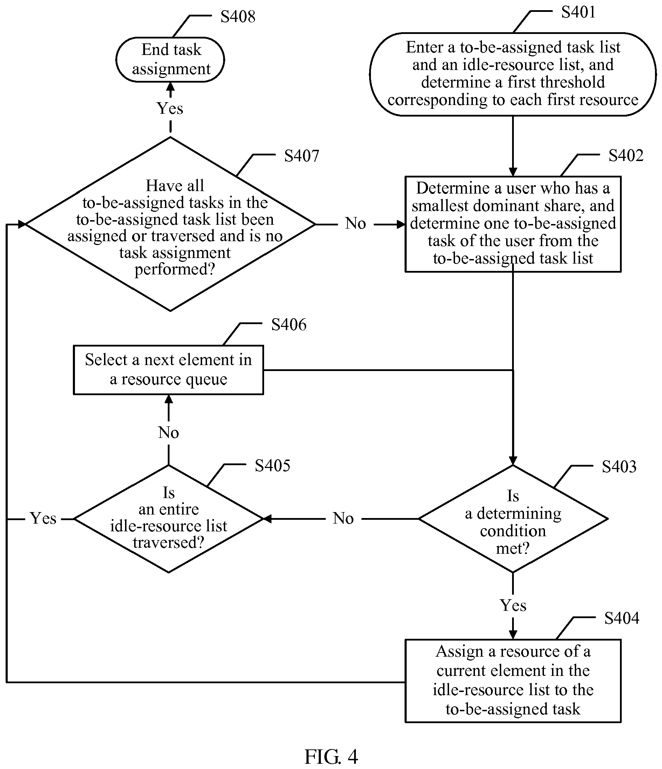

For example, as shown in FIG. 4, in a specific implementation, based on an entered to-be-assigned task list and an idle-resource queue of a computing node, a task in the to-be-assigned task list is assigned in the foregoing manner.

S401. Enter a to-be-assigned task list and an idle-resource list, determine a threshold corresponding to each monitored resource, and then perform S402.

The idle-resource list is used to record an amount of current remaining resources of each node. In a possible implementation, a data structure of each element in the list stores information about a computing node and an amount of each type of remaining resource of the computing node.

S402. Referring to steps S301, S302, and S303, determine a user who has a minimum dominant share and determine one to-be-assigned task of the user from the to-be-assigned task list, and perform S403.

S403. Referring to step S304, determine whether a monitored resource of a current element in the idle-resource list meets a determining condition; and if the determining condition is met, perform S404, or if the determining condition is not met, perform S405.

S404. Assign a resource of the current element in the idle-resource list to the to-be-assigned task, that is, assign the to-be-assigned task to a computing node corresponding to the current element, and perform S407.

When S404 is performed, after a task is assigned, an assigned resource of the user changes, leading to a dominant share change. Therefore, the changed dominant share of the user needs to be updated.

S405. Determine whether an entire current idle-resource list is traversed, that is, by repeating S403 and S407, determine whether all elements of the idle-resource list are traversed but no elements meeting the condition are found; and if all the elements of the idle-resource list are traversed but no elements meeting the condition are found, perform S407; or if all the elements of the idle-resource list are traversed and an element meeting the condition is found, perform S406.

S406. Select a next element in a resource queue, and perform S403.

S407. Determine whether all tasks in the to-be-assigned task list have been assigned, or whether all tasks have been traversed and no assignment can be performed, that is, if all the tasks in the task list have been assigned, or when all the tasks in the to-be-assigned task list are traversed by repeatedly performing steps S402, S403, and S404 for a plurality of times, and no tasks can be assigned, perform S408 to end assignment, otherwise, perform S402 to continue to assign a task.

S408. End task assignment.

According to this embodiment, when a to-be-assigned task is assigned, the to-be-assigned task is assigned to a computing node whose amount of monitored resources remaining after the to-be-assigned task is assigned to the computing node is greater than or equal to a maximum threshold, so that the computing node to which the task is assigned still has some resources that can be assigned to another task. This reduces resource fragmentation caused by an excessively small amount of resources remaining after the task is assigned, and increases resource utilization.

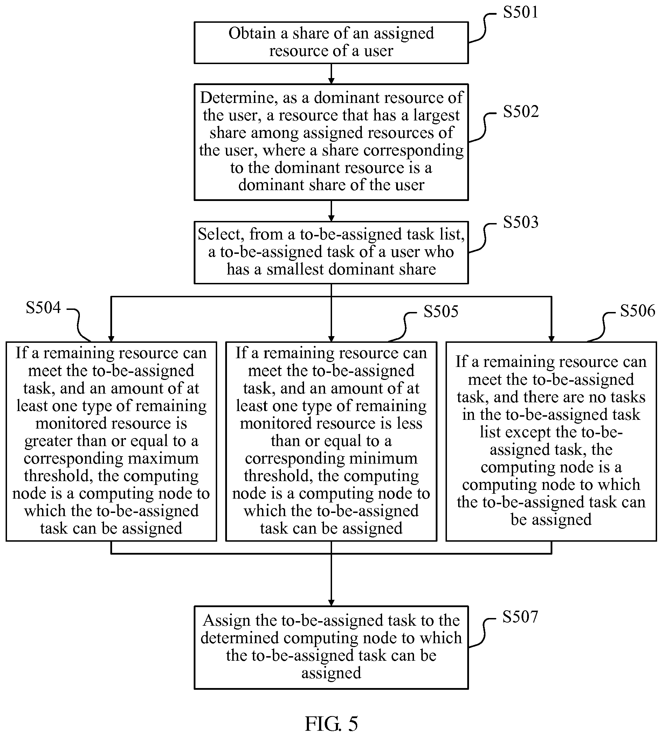

Referring to FIG. 5, FIG. 5 is a flowchart of a method according to still another embodiment of the present invention. In this embodiment, improvement is made based on the embodiment shown in FIG. 3, and in addition to the determining condition in S304, another determining condition is added. Therefore, this embodiment may be understood with reference to the embodiment shown in FIG. 3.

Steps S501, S502, and S503 are the same as steps S301, S302, and S303, and no details are repeated in this embodiment.

S504. If a remaining resource of a computing node can meet a resource requirement of the to-be-assigned task, and an amount of at least one type of remaining monitored resource of the computing node is greater than or equal to a corresponding maximum threshold after the to-be-assigned task is assigned to the computing node, the computing node is a computing node to which the to-be-assigned task can be assigned.

S505. If a remaining resource of a computing node can meet a resource requirement of the to-be-assigned task, and an amount of at least one type of monitored resource of the computing node that remain after the to-be-assigned task is assigned to the computing node is less than or equal to a corresponding minimum threshold, the computing node is a computing node to which the to-be-assigned task can be assigned.

S506. If a remaining resource of a computing node can meet a resource requirement of the to-be-assigned task, and there are no tasks in the to-be-assigned task list except the to-be-assigned task, the computing node is a computing node to which the to-be-assigned task can be assigned.

S504, S505, and S506 are three determining conditions for determining whether the computing node is a node to which the to-be-assigned task can be assigned. The three determining conditions are parallel, and a computing node that meets any one of the three determining conditions is the computing node to which the to-be-assigned task can be assigned.

In a specific implementation, a specific sequence for performing determining based on the three conditions by a node and corresponding task assignment steps may vary. For example, S504 may be first performed; and if the computing node does not meet the condition in S504, S505 is performed; and when no condition in S504 or S505 is met, S506 is performed. Determining may alternatively be performed in another sequence. In addition, for all computing nodes in a distributed system, determining may be performed for each node based on the three conditions, or all nodes may be polled according to one condition and then remaining nodes that do not meet the foregoing condition are polled according to another condition.

In a specific implementation, determining may be performed according to all of the three conditions, or only S504 and S505 are performed, or only S504 and S506 are performed.

S504 is a determining condition consistent with step S304, and may be understood with reference to descriptions in S304.

In S505, a second resource may be a resource that is the same as or different from the monitored resource. The minimum threshold may be configured in a preset manner, so that the minimum threshold is less than or equal to a resource fragment size tolerable to the second resource in the current distributed system.

In S506, that there are no tasks in the to-be-assigned task list except the to-be-assigned task means that the current to-be-assigned task is the last task in the to-be-assigned task list. In this case, no tasks need to be assigned afterwards; therefore, when the task is assigned, resource fragments do not need to be considered.

S507. Assign the to-be-assigned task to the computing node to which the to-be-assigned task can be assigned and that is determined in S505, S506, and S507.

It should be noted that "the computing node to which the to-be-assigned task can be assigned" is merely a concept put forward for ease of description in this embodiment. In a specific implementation, there may be a step of determining a node as "the computing node to which the to-be-assigned task can be assigned", and then the task is assigned to the node; or there is only "the computing node to which the to-be-assigned task can be assigned" logically, but there is no actual step of defining the node as the concept. For example, each time after the foregoing determining steps S505, S506, and S507 are performed, a task may be directly assigned to a node that meets a determining condition.

In this embodiment, technical effects of the foregoing embodiment can be achieved, and a computing node whose amount of at least one type of remaining second resource is less than or equal to the corresponding minimum threshold is determined as a computing node to which the to-be-assigned task can be assigned, so that an amount of resource fragments generated during task assignment is less than or equal to the minimum threshold, improving adaptability and assignment efficiency of a task assignment method. In addition, when the to-be-assigned task is the last task in the task list, the to-be-assigned task is directly assigned to a computing node with sufficient resources, without considering whether resource fragments are generated, thereby improving assignment efficiency.

The following describes still another embodiment provided in the present invention. In this embodiment, a method for automatically generating and dynamically adjusting a maximum threshold is designed based on the foregoing two embodiments. Therefore, in this embodiment, related methods for determining the maximum threshold and determining whether an amount of resources is greater than or equal to the maximum threshold are mainly described. An entire task assignment method can be understood with reference to the foregoing two embodiments.

As described above, a function of the maximum threshold is to ensure that an amount of one or more types of monitored resources remaining after the to-be-assigned task is assigned to the computing node is greater than or equal to the maximum threshold, so as to ensure subsequent task assignment and avoid generating resource fragments. Therefore, the maximum threshold is determined to ensure as much as possible that an amount of monitored resources required by at least one of subsequent tasks is met.

On such basis, in an implementation, the maximum threshold is greater than or equal to a maximum amount of monitored resources required by N unassigned tasks that require smallest amounts of monitored resources corresponding to the maximum threshold in the to-be-assigned task list. That is, the maximum threshold can meet a requirement, for the monitored resources, of the N tasks that require smallest amounts of the monitored resources in the task list. An unassigned task in the to-be-assigned task list is a task that has not yet been assigned during current task assignment. For example, the to-be-assigned task list is a task queue, when a new task is added, an enqueuing operation is performed on the task, and when a task is assigned to a computing node, a dequeuing operation is performed on the task. In this case, an unassigned task is a task in a current queue.

A value of N may be set according to a specific scenario, so that an amount of remaining monitored resources of the computing node to which a task is assigned based on the maximum threshold can meet resource requirements of at least N to-be-assigned tasks. In a possible implementation, N may be configured by a person in a preset manner. In another possible implementation, N may alternatively be a value automatically obtained by rounding n% of a total quantity of unassigned tasks in the to-be-assigned task list, where n may be configured according to a resource fragment control requirement. When N is a fixed value, if the value of N is greater than the total quantity of unassigned tasks in the to-be-assigned task list, the value of N is adjusted to the total quantity of unassigned tasks.

In this implementation, the maximum threshold is determined, so that the amount of remaining monitored resources of the computing node determined can meet an amount of monitored resources required by at least N tasks in the to-be-assigned task list, avoiding generating resource fragments.

In another possible implementation, with reference to step S304, when the computing node to which the to-be-assigned task can be assigned is determined, it should meet that after the to-be-assigned task is assigned to the computing node, an amount of any type of remaining monitored resource of the computing node is greater than or equal to a maximum threshold corresponding to the type of monitored resource. That is, in this implementation, amounts of all remaining monitored resources of the computing node need to be determined.

A difference from the foregoing implementation of this embodiment lies that, in this implementation, whether the amounts of all the remaining monitored resources are all greater than or equal to a corresponding maximum threshold needs to be determined, so as to ensure that, after a current to-be-assigned task has been assigned to a selected computing node, all remaining monitored resources of the selected computing node can meet resource requirements of some unassigned tasks.

In a specific implementation of this embodiment, the maximum threshold is determined to ensure that amounts of all the remaining monitored resources of the computing node can meet an amount of all the monitored resources required by any one of the N unassigned tasks. The N unassigned tasks may be determined in a plurality of manners. For example, the N unassigned tasks may be determined based on a required amount of a type of monitored resource, and N unassigned tasks that require smallest amounts of a type of dominant resource. In this case, details are as follows:

A. The maximum threshold only needs to be greater than or equal to an amount of remaining resources for N unassigned tasks that require smallest amounts of one type of monitored resource; in this case, the maximum threshold needs to be greater than or equal to a maximum amount of monitored resources required by all of the N tasks.

B. The maximum threshold needs to be greater than or equal to all of amounts of remaining resources for N tasks that require smallest amounts of several types of monitored resources; in this case, N unassigned tasks that require smallest amounts of a type of resource are considered as a group, and a maximum amount of monitored resources required by N unassigned tasks in each group is a greatest amount of the monitored resources required by the group of tasks; the maximum threshold needs to be greater than a maximum value of maximum amounts of required monitored resources corresponding to a plurality of groups of unassigned tasks.

Similar to the foregoing implementation, the value of N may be preset, or may be automatically generated and adjusted, and no details are repeated herein.

In this implementation, an amount of monitored resources can meet an amount of monitored resources required by any one of N unassigned tasks that require smallest amounts of one or more types of monitored resource. Compared with the foregoing embodiment, this embodiment can avoid a problem that assignment cannot be performed in the foregoing embodiment because a plurality of types of monitored resources are required by one task.

For example, currently, there are two types of monitored resources: CPUs and memories, there are three tasks in a to-be-assigned list represented by A(5,5), B(10,1), C(5,2), D(2,5), and E(1,10) according to a format of "task name (an amount of CPUs required, an amount of memories required)". In this case, when the task A is a to-be-assigned task, a value of N is 2 according to the foregoing embodiment, and a maximum threshold needs to be greater than a maximum amount of monitored resources required by at least two tasks that require smallest amounts of corresponding monitored resources; a maximum threshold corresponding to the CPUs is a larger value 2 between the tasks D and E, a maximum threshold corresponding to the memories is a larger value 2 between the tasks B and C. However, if a remaining resource of a computing node is (2,2), none of the tasks B, C, D, and E can be met.

In this embodiment, the value of N is 2, and the CPUs and the memories are used as the monitored resources. In this case, when two tasks that require smallest amounts of CPUs are selected, the two tasks are the tasks D and E; or when two tasks that require smallest amounts of memories are selected, the two tasks are the tasks A and B. If the maximum threshold only needs to be greater than or equal to an amount of remaining resources for N unassigned tasks that require smallest amounts of a type of monitored resource, using CPUs as an example, a maximum threshold of CPUs is a maximum quantity 2 of CPUs required by the tasks D and E, and a maximum threshold of memories is a maximum quantity 10 of memories required by the tasks D and E. In this case, when a remaining resource of a computing node is (2,10), a requirement for CPUs and memories by either the task D or E can be met.

Similarly, if the maximum threshold needs to be greater than or equal to an amount of each of several types of remaining monitored resources corresponding to N tasks that require smallest amounts of monitored resources, for example, when a maximum threshold corresponding to the CPUs is determined, both the CPUs and the memories are monitored resources, a maximum quantity of CPUs required by either the task D or E that requires a smallest quantity of CPUs is 2, and a maximum quantity of CPUs required by either the task B or the C that require smallest quantity of memories is 10. In this case, a maximum threshold of the CPUs is a larger value 10 between the two values. Similarly, a maximum threshold corresponding to the memories is 10. When a remaining resource of a computing node is (10,10), a requirement for CPUs and memories by any one of the task B, C, D or E can be met.

For the maximum threshold determining method described in this embodiment, refer to determining and update of the maximum threshold corresponding to the monitored resource in the method in either of the foregoing two embodiments. In a specific implementation, the maximum threshold may be determined parallelly or independently at all stages of determining a computing node to which a to-be-assigned task can be assigned. Each time after a task is assigned, the maximum threshold may be updated according to a change, made after assignment, of the to-be-assigned task list. For example, in an example in FIG. 4, the maximum threshold may be determined in step S401. After S404 is performed, the maximum threshold for resources that are left after assignment is updated.

In an implementation, the maximum threshold may be updated each time after a task is assigned. Specifically, updating may be performed on only a maximum threshold corresponding to monitored resources for which assignment has been performed during task assignment. In another implementation, a threshold of monitored resources may be updated when no tasks can be assigned after a to-be-assigned task queue is traversed.

In this embodiment, with reference to the method in the foregoing embodiment, in addition to achieving the foregoing effect, the maximum threshold corresponding to the monitored resources are determined and updated according to resource requirements of the tasks in the to-be-assigned task list, to ensure that an amount of remaining monitored resources of the computing node to which the to-be-assigned task can be assigned and that is determined according to the maximum threshold can meet the tasks in the to-be-assigned task list, thereby obtaining a more accurate maximum threshold and improving assignment efficiency of an algorithm.

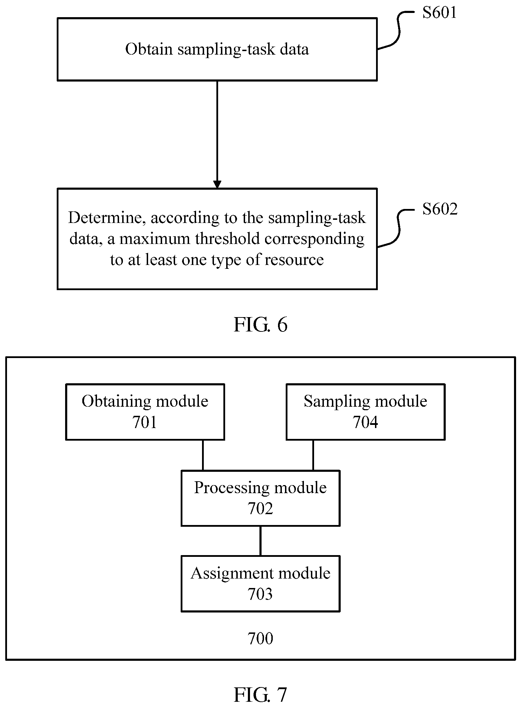

The following describes, with reference to FIG. 6, still another embodiment provided in the present invention. Similar to an objective of the foregoing embodiment, this embodiment provides still another method for automatically generating and dynamically adjusting a maximum threshold. Therefore, in this embodiment, a complete task assignment method may be understood with reference to the foregoing two embodiments corresponding to FIG. 3 and FIG. 5. This embodiment further includes the following steps.

S601. Obtain sampling-task data, where the sampling-task data includes resource requirement information of sampling tasks, and the resource requirement information is an amount of each type of resource required by each task.

The sampling tasks are a task sample set used to determine a maximum threshold. A sampling task is a historical sample and may include a plurality of historical tasks. The historical tasks may include a prestored historical task, and may also include a task that has been assigned in a task assignment process. The sampling-task data includes user information of a task and an amount of each type of resource required by a task or an amount of each type of resource to be consumed actually. If the sampling-task data includes an amount of resources to be consumed actually, the amount of resources to be consumed actually may be used as resource requirement information of a task.

S602. Determine, according to the sampling-task data, a maximum threshold corresponding to at least one type of resource.

When the maximum threshold is determined, a maximum threshold corresponding to a monitored resource may be determined based on a task in a to-be-assigned task list in the foregoing embodiment and with reference to related descriptions in the foregoing embodiment. In this embodiment, the maximum threshold corresponding to the monitored resource may be determined according to a sampling task and based on a similar principle.

In a possible implementation, M tasks that require smallest amounts of one type of resource among the sampling tasks are used as a smallest task set, and a maximum amount of a type of monitored resource required by the smallest task set is a maximum threshold corresponding to the type of monitored resource.

In another possible implementation, M tasks that require smallest amounts of a plurality of types of resources among the sampling tasks are used as a plurality of smallest task sets, and a maximum amount of a type of monitored resource required by each task in each of the plurality of task sets is a maximum threshold corresponding to the type of monitored resource.

For the maximum threshold determining method described in this embodiment, refer to determining and update of the maximum threshold corresponding to the monitored resource in the method in either of the foregoing two embodiments. In a specific implementation, the maximum threshold may be determined parallelly or independently at all stages of determining a computing node to which a to-be-assigned task can be assigned. Each time after a task is assigned, the maximum threshold may be updated according to a change, made after assignment, of the to-be-assigned task list. For example, in an example in FIG. 4, the maximum threshold may be determined in step S401. After S404 is performed, the maximum threshold for resources that are left after assignment is updated.

In an implementation, the maximum threshold may be updated each time after a task is assigned. Specifically, updating may be performed on only a maximum threshold corresponding to monitored resources for which assignment has been performed during task assignment. In another implementation, a threshold of monitored resources may be updated when no tasks can be assigned after a to-be-assigned task queue is traversed.

In this embodiment, with reference to the method in the foregoing embodiment, in addition to achieving the foregoing effects of the embodiments corresponding to FIG. 3 and FIG. 5, the maximum threshold corresponding to the monitored resources is determined and updated according to sampling-task data, to ensure that an amount of remaining monitored resources of the computing node to which the to-be-assigned task can be assigned and that is determined according to the maximum threshold can meet the tasks in the to-be-assigned task list, thereby obtaining a more accurate maximum threshold and improving assignment efficiency of an algorithm.

With reference to FIG. 7, FIG. 7 is a logical structure diagram of a management node 700 according to an embodiment of the present invention. Based on inventive concepts of the foregoing several method embodiments, this embodiment provides a management node including function modules that can implement the foregoing methods. The management node includes:

an obtaining module 701, configured to obtain a share of an assigned resource of a user, where the obtaining module may be configured to perform S301 in the foregoing embodiment;
a processing module 702, configured to select a to-be-assigned task from a to-be-assigned task list, and determine a computing node to which the to-be-assigned task can be assigned, where the processing module may be configured to perform steps S302 and S303 in the foregoing embodiment and a substep of determining a computing node to which the to-be-assigned task can be assigned in step S304, and may further perform steps S504, S505, and S506, and execute the methods for generating and adjusting a maximum threshold in the foregoing two embodiments; and
an assignment module 703, configured to assign the to-be-assigned task to the computing node to which the to-be-assigned task can be assigned, where the assignment module may be configured to perform a substep of assigning the to-be-assigned task to the computing node in step S304 and step S507 in the foregoing embodiments.

In some implementations, the management node further includes a sampling module 704, configured to obtain sampling-task data. When the processing module executes the method for generating and adjusting a maximum threshold based on the sampling-task data in the foregoing embodiment, the sampling module may be configured to perform step S601.

In this embodiment of this application, the module division is merely an example, is merely logical function division, and may be other division in actual implementation. In addition, function modules in the embodiments of this application may be integrated into one processing module, or each of the modules may exist alone physically, or two or more modules may be integrated into one module. The integrated module may be implemented in a form of hardware, or may be implemented in a form of a software function module.

According to the management node provided in this embodiment, when the management node assigns a task to a computing node in a distributed system, technical effects described in the foregoing method embodiments can be achieved.

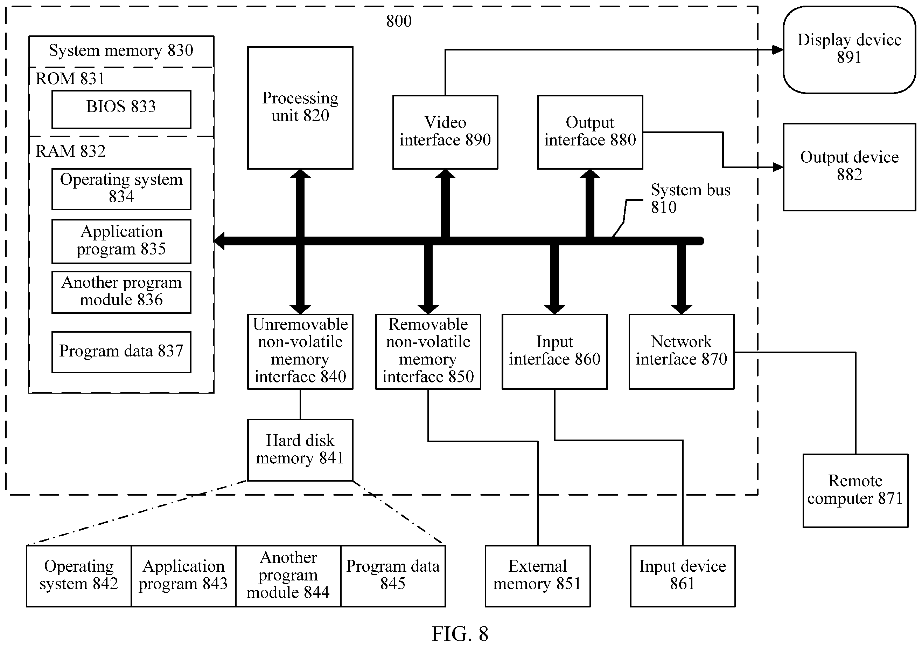

FIG. 8 shows a system instance of a management node applicable to an embodiment of the present invention. Functions of logical modules of the management node in the foregoing embodiment can be implemented based on a system environment in this embodiment. This embodiment is an instance applicable to the present invention, and does not intend to exert any limitation on a function and structure of the management node provided in the present invention.

A general purpose computer system environment is used as an example in this embodiment of the present invention to describe the management node. It is well known that the management node may further be of another hardware architecture to implement a similar function, and includes but is not limited to a personal computer, a serving computer, a multi-processor system, a microprocessor-based system, a programmable consumer electrical appliance, a network PC, a small-scale computer, a large-scale computer, or a distributed computing environment including any one of the foregoing systems or devices.

Referring to FIG. 8, a system used as an example to implement the present invention includes a general purpose computing device in a form of a management node 800. With reference to the system scenario and architecture in FIG. 1, the management node in this embodiment may execute the embodiment of the present invention described in the foregoing system scenario and architecture. For example, the general purpose computing device may be a master node, a management node, or any node in a decentralized architecture.

Components of the management node 800 may include but are not limited to a processing unit 820, a system memory 830, and a system bus 810. The system bus couples various system components included in the system memory to the processing unit 820. The system bus 810 may be a bus of any one of several types of bus structures. These buses may include a memory bus or memory controller, a peripheral bus, and local buses that use one type of bus structure. The bus structure may include an industry standard architecture (ISA) bus, a micro-channel architecture (MCA) bus, an extended ISA (EISA) bus, a Video Electronics Standards Association (VESA) local bus, and a peripheral device interconnect (PCI) bus.

The management node 800 generally includes a plurality of types of management node readable media. The management node readable media may be any medium effectively accessible by the management node 800, and include a volatile or non-volatile medium and a detachable or non-detachable medium. For example, the management node readable media may include but be not limited to a management node storage medium and a communications medium. The management node storage medium includes a volatile medium, a non-volatile medium, a detachable medium, and a non-detachable medium. These media may be implemented by using any method or technology used to store information such as a management node readable instruction, a data structure, a program module, or other data. The management node storage medium includes but is not limited to a RAM, a ROM, an EEPROM, a flash memory, or another memory technology; or a hard disk storage, a solid-state hard disk storage, an optical disc storage, a magnetic disk cartridge, a magnetic disk storage, or another storage device; or any other media that can store required information and that is accessible by the management node 800. The communications medium generally includes an embedded computer readable instruction, a data structure, a program module, or other data in a modularized data signal (for example, a carrier signal or a signal in another transmission mechanism), and may further include any medium for transferring information. The term "modularized data signal" is a signal that has one or more signal feature groups or is changed by encoding information in the signal. For example, the communications medium includes but is not limited to a wired network or a wired medium based on a direct wired connection, and a wireless medium including a sound medium, an RF infrared, or another wireless medium. The foregoing combination may fall within a scope of the management node readable medium.

The system memory 830 includes the management node storage medium, and may be a volatile memory or a non-volatile memory, for example, a read-only memory (ROM) 831 and a random access memory (RAM) 832. A basic input/output system 833 (BIOS) is generally stored in the ROM 831, includes basic routine programs, and helps transmit information between components of the management node 810. The RAM 832 generally includes a data and/or program module, and can be accessed and/or operated immediately by the processing unit 820. For example, FIG. 8 shows but is not limited to an operating system 834, an application program 835, another program module 836, and program data 837.

The management node 800 may also include another detachable/non-detachable management node storage medium and another volatile/non-volatile management node storage medium. FIG. 8 is only an instance. In FIG. 8, a hard disk memory 841 may be a non-detachable non-volatile readable magnetic write medium; and an external memory 851 may be any detachable non-volatile external memory such as an optical disk, a magnetic disk, a flash memory, or a removable hard disk; the hard disk memory 81 is generally connected to the system bus 810 by using a non-detachable storage interface (for example, an interface 840); and the external memory is generally connected to the system bus 810 by using a detachable storage interface (for example, an interface 860).

The above-described driver shown in FIG. 8 and the management node storage medium related to the driver store a management node readable instruction, a data structure, a program module, and other data of the management node 800. For example, the hard disk memory 841 is configured to store an operating system 842, an application program 843, another program module 844, and program data 845. It should be noted that these components may be the same as or different from the operating system 834, the application program 835, the another program module 836, and the program data 837 respectively.

In this embodiment, the method in the foregoing embodiment or the functions of the logical modules in the foregoing embodiment may be executed or implemented by reading, by the processing unit 820, the code or readable instruction stored in the management node storage medium.

A user may enter a command or information on the management node 800 by using various input devices 861. The various input devices are usually connected to the processing unit 820 by using a user input interface 860, and the user input interface 860 is coupled with the system bus, or may be connected to a bus structure by using another interface such as a parallel interface or a universal serial interface (USB). The display device 890 may alternatively be connected to the system bus 810 by using an interface (for example, a video interface 890). In addition, for example, the computing device 800 may alternatively include various peripheral output devices 820, and the output devices may be connected by using an output interface 880 or the like.

The management node 800 may be logically connected to one or more computing devices, for example, a remote computer 870. A remote computing node includes the management node, a computing node, a server, a router, a network PC, an equivalent device, or another universal network node, and generally includes numerous or all components that are discussed above and that are related to the management node 800. In the architecture described in FIG. 1, the remote computing node may be a slave node, a computing node, or another management node. The logical connection described in FIG. 8 includes a local area network (LAN) and a wide area network (WAN), and may also include another network. The management node and another node may interact with another entity in the present invention through a logical connection. For example, task information and data may be transmitted through a logical connection to a user to obtain a to-be-assigned task of the user; resource data and a task assignment command are transmitted through a logical connection to a computing node, so as to obtain resource information and an assign task of each node.

Persons skilled in the art should be aware that in the foregoing examples, functions described in the present invention may be implemented by hardware, software, firmware, or any combination thereof. When the present invention is implemented by using software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another place. The storage medium may be any available medium accessible to a general-purpose or dedicated computer.

The objectives, technical solutions, and benefits of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made within the spirit and principle of the present invention shall fall within the protection scope of the present invention.

**Claims**

1. A distributed-system task assignment method, wherein the method is used to assign to-be-assigned tasks of a plurality of users to a plurality of computing nodes in a distributed system; and the method comprises:

    obtaining a share of an assigned resource of a user, wherein the share is a percentage of an amount of a type of resource that have been assigned to the user in a total amount of the type of resource assignable in the distributed system, a resource that has a largest share among assigned resources of the user is a dominant resource of the user, and the share corresponding to the dominant resource is a dominant share of the user;
    selecting a to-be-assigned task from a task list, wherein the to-be-assigned task is a task of a user who has a minimum dominant share among the plurality of users; and
    if the plurality of computing nodes comprise a first computing node, assigning the to-be-assigned task to the first computing node, wherein the first computing node is a computing node whose remaining resources can meet an amount of resources required by the to-be-assigned task, and after the to-be-assigned task is assigned to the first computing node, at least one type of monitored resource of the first computing node meets that an amount of the type of remaining monitored resource is greater than or equal to a maximum threshold corresponding to the monitored resource.

2. The method according to claim 1, wherein the method further comprises: if the plurality of computing nodes do not include the first computing node but include a second computing node, assigning the to-be-assigned task to the second computing node, wherein the second computing node is a computing node whose remaining resources can meet an amount of resources required by the to-be-assigned task, and after the to-be-assigned task is assigned to the second node, at least one type of monitored resource of the second node meets that an amount of the type of remaining monitored resource is less than or equal to a minimum threshold corresponding to the monitored resource, wherein the minimum threshold is less than the maximum threshold.

3. The method according to claim 1 or 2, wherein the maximum threshold is greater than or equal to an amount of the monitored resources required by at least one to-be-assigned task in a to-be-assigned task list.

4. The method according to claim 3, wherein the maximum threshold is greater than or equal to a maximum amount of the monitored resources required by all of N unassigned tasks that require smallest amounts of the monitored resources in the to-be-assigned task list, wherein N is an integer that is greater than or equal to 1 and less than or equal to a total quantity of unassigned tasks in the to-be-assigned task list.

5. The method according to claim 1 or 2, wherein an amount of any type of the remaining monitored resource of the first computing node is greater than or equal to a maximum threshold corresponding to the any type of monitored resource.

6. The method according to claim 5, wherein the maximum threshold is greater than or equal to a maximum value of maximum amounts of the type of monitored resource required by all groups of at least one group of tasks, wherein the maximum amount of the type of required monitored resource is a maximum amount of the type of monitored resource required by all tasks in a group of tasks, and the group of tasks are N unassigned tasks in the to-be-assigned task list, wherein N is an integer greater than or equal to 1.

7. The method according to claim 6, wherein the group of tasks are specifically:

N unassigned tasks that require smallest amounts of any type of monitored resource in the to-be-assigned task list.

8. The method according to claim 1 or 2, wherein the method further comprises:

obtaining sampling-task data, wherein the sampling-task data comprises monitored-resource requirement information of a plurality of tasks; and
determining, according to the sampling-task data, the maximum threshold corresponding to the at least one type of monitored resource.

9. The method according to claim 8, wherein the determining, according to the sampling-task data, the maximum threshold corresponding to the at least one type of monitored resource comprises:

determining that a maximum amount of monitored resources Y required by a smallest task set corresponding to a monitored resource X is a maximum threshold corresponding to the monitored resources Y, wherein the monitored resource X is any type of monitored resource, the monitored resources Y are monitored resources for which the corresponding maximum threshold is to be determined, the smallest task set corresponding to the monitored resource X comprises M tasks that require smallest amounts of the monitored resources X in the sampling-task data, and a maximum amount of the monitored resources Y required by all tasks in the smallest task set is a maximum amount of the monitored resources Y required by the smallest task set, wherein M is a positive integer greater than or equal to 1; or
determining that a maximum value of maximum amounts of the monitored resources Y required by a plurality of smallest task sets corresponding to a plurality of types of monitored resources is a maximum threshold corresponding to the monitored resources Y.

10. The method according to claim 8 or 9, wherein the method further comprises:

obtaining at least one piece of sampling-task update data, wherein the sampling-task update data comprises resource requirement information of a task executed within a preset period of time; and
updating, according to the sampling-task update data, a maximum threshold corresponding to at least one type of resource.

11. A management node, wherein the management node is configured to assign to-be-assigned tasks of a plurality of users to a plurality of computing nodes in a distributed system; and the management node comprises:

an obtaining module, configured to obtain a share of an assigned resource of a user, wherein the share is a percentage of an amount of a type of resource that have been assigned to the user in a total amount of the type of resource assignable in the distributed system, a resource that has a largest share among assigned resources of the user is a dominant resource of the user, and the share corresponding to the dominant resource is a dominant share of the user;
a processing module, configured to select a to-be-assigned task from a task list, wherein the to-be-assigned task is a task of a user who has a minimum dominant share among the plurality of users; and
an assignment module, configured to: if the plurality of computing nodes comprise a first computing node, assign the to-be-assigned task to the first computing node, wherein the first computing node is a computing node whose remaining resources can meet an amount of resources required by the to-be-assigned task, and after the to-be-assigned task is assigned to the first computing node, at least one type of monitored resource of the first computing node meets that an amount of the type of remaining monitored resource is greater than or equal to a maximum threshold corresponding to the monitored resource.

12. The management node according to claim 11, wherein the assignment module is further configured to: if the plurality of computing nodes do not include the first computing node but include a second computing node, assign the to-be-assigned task to the second computing node, wherein the second computing node is a computing node whose remaining resources can meet an amount of resources required by the to-be-assigned task, and after the to-be-assigned task is assigned to the second node, at least one type of monitored resource of the second node meets that an amount of the type of remaining monitored resource is less than or equal to a minimum threshold corresponding to the monitored resource, wherein the minimum threshold is less than the maximum threshold.

13. The management node according to claim 11 or 12, wherein the processing module is further configured to determine a maximum threshold corresponding to the type of monitored resource, and the maximum threshold is greater than or equal to an amount of the monitored resources required by at least one to-be-assigned task in a to-be-assigned task list.

14. The management node according to claim 13, wherein the maximum threshold is greater than or equal to a maximum amount of the monitored resources required by all of N unassigned tasks that require smallest amounts of the monitored resources in the to-be-assigned task list, wherein N is an integer that is greater than or equal to 1 and less than or equal to a total quantity of unassigned tasks in the to-be-assigned task list.

15. The management node according to claim 11 or 12, wherein the first computing node is specifically: an amount of any type of the remaining monitored resource of the first computing node is greater than or equal to a maximum threshold corresponding to the any type of monitored resource.

16. The management node according to claim 15, wherein the processing module is further configured to determine a maximum threshold corresponding to the monitored resource, the maximum threshold is greater than or equal to a maximum value of maximum amounts of the type of monitored resource required by all groups of at least one group of tasks, wherein the maximum amount of the type of required monitored resource is a maximum amount of the type of monitored resource required by all tasks in a group of tasks, and the group of tasks are N unassigned tasks in the to-be-assigned task list, wherein N is an integer greater than or equal to 1.

17. The management node according to claim 16, wherein the group of tasks are specifically:
N unassigned tasks that require smallest amounts of any type of monitored resource in the to-be-assigned task list.

18. The management node according to claim 11 or 12, wherein the management node further comprises:

    a sampling module, configured to obtain sampling-task data, wherein the sampling-task data comprises monitored-resource requirement information of a plurality of tasks; and
    the processing module is further configured to: determine, according to the sampling-task data, the maximum threshold corresponding to the at least one type of monitored resource.

19. The method according to claim 18, wherein when the processing module is specifically configured to determine, according to the sampling-task data, the maximum threshold corresponding to the at least one type of monitored resource, the processing module is specifically configured to:

determine that a maximum amount of monitored resources Y required by a smallest task set corresponding to a monitored resource X is a maximum threshold corresponding to the monitored resources Y, wherein the monitored resource X is any type of monitored resource, the monitored resources Y are monitored resources for which the corresponding maximum threshold is to be determined, the smallest task set corresponding to the monitored resource X comprises M tasks that require smallest amounts of the monitored resources X in the sampling-task data, and a maximum amount of the monitored resources Y required by all tasks in the smallest task set is a maximum amount of the monitored resources Y required by the smallest task set, wherein M is a positive integer greater than or equal to 1; or determine that a maximum value of maximum amounts of the monitored resources Y required by a plurality of smallest task sets corresponding to a plurality of types of monitored resources is a maximum threshold corresponding to the monitored resources Y.

20. The computing node according to claim 18 or 19, wherein
the sampling module is further configured to obtain at least one piece of sampling-task update data, wherein the sampling-task update data comprises resource requirement information of a task executed within a preset period of time; and
the processing module is further configured to update, according to the sampling-task update data, a maximum threshold corresponding to at least one type of resource.

21. A distributed system, wherein the distributed system comprises a plurality of computing nodes, the computing nodes provide required resources for to-be-assigned tasks of a plurality of users to execute the to-be-assigned tasks, and the distributed system further comprises:
the management node according to any one of claims 11 to 20.

FIG. 1A

FIG. 1B

FIG. 1C

FIG. 1D

FIG. 1E

Start

Calculate a share of each type
of resource of each user that has
been assigned to the user

Select a task of a user who has
a lowest dominant share from a
task list, and assign the task

No resource
is available or no task needs
to be executed

No

Yes

End

FIG. 2

21

Obtain a share of an assigned resource of a user — S301

Determine, as a dominant resource of the user, a resource that has a largest share among assigned resources of the user, where a share corresponding to the dominant resource is a dominant share of the user — S302

Select, from a to-be-assigned task list, a to-be-assigned task of a user who has a smallest dominant share — S303

If the multiple computing nodes include a first computing node, assign the to-be-assigned task to the first computing node — S304

FIG. 3

S408

End task
assignment

Yes

S407

Have all
to-be-assigned tasks in the
to-be-assigned task list been
assigned or traversed and is no
task assignment
performed?

No

S406

Select a next element in
a resource queue

No

S405

Is
an entire
idle-resource list
traversed?

Yes

No

S401

Enter a to-be-assigned task list
and an idle-resource list, and
determine a first threshold
corresponding to each first resource

S402

Determine a user who has a
smallest dominant share, and
determine one to-be-assigned
task of the user from the
to-be-assigned task list

S403

Is
a determining
condition
met?

Yes

S404

Assign a resource of a
current element in the
idle-resource list to the
to-be-assigned task

FIG. 4

```
                                                              ┌─ S501
        ┌──────────────────────────────────┐   ⌐╮
        │      Obtain a share of an assigned │  │ │
        │        resource of a user          │  ╰┘
        └──────────────────────────────────┘
                        │
                        ▼
                                                              ┌─ S502
        ┌──────────────────────────────────┐   ⌐╮
        │  Determine, as a dominant resource of│ │ │
        │  the user, a resource that has a largest│╰┘
        │  share among assigned resources of │
        │  the user, where a share corresponding│
        │  to the dominant resource is a     │
        │  dominant share of the user        │
        └──────────────────────────────────┘
                        │
                        ▼
                                                              ┌─ S503
        ┌──────────────────────────────────┐   ⌐╮
        │  Select, from a to-be-assigned task list,│ │
        │  a to-be-assigned task of a user who│╰┘
        │  has a smallest dominant share     │
        └──────────────────────────────────┘
```

S504 ┐   S505   S506

| If a remaining resource can meet the to-be-assigned task, and an amount of at least one type of remaining monitored resource is greater than or equal to a corresponding maximum threshold, the computing node is a computing node to which the to-be-assigned task can be assigned | If a remaining resource can meet the to-be-assigned task, and an amount of at least one type of remaining monitored resource is less than or equal to a corresponding minimum threshold, the computing node is a computing node to which the to-be-assigned task can be assigned | If a remaining resource can meet the to-be-assigned task, and there are no tasks in the to-be-assigned task list except the to-be-assigned task, the computing node is a computing node to which the to-be-assigned task can be assigned |

```
                        │
                        ▼
                                                              ┌─ S507
        ┌──────────────────────────────────┐   ⌐╮
        │  Assign the to-be-assigned task to the│ │
        │  determined computing node to which│╰┘
        │  the to-be-assigned task can be    │
        │  assigned                          │
        └──────────────────────────────────┘
```

FIG. 5

```
┌────────────────────────────────────────┐          S601
│        Obtain sampling-task data        │  ⌐
└────────────────────────────────────────┘
                    │
                    ▼
┌────────────────────────────────────────┐          S602
│  Determine, according to the sampling-task │  ⌐
│  data, a maximum threshold corresponding   │
│      to at least one type of resource      │
└────────────────────────────────────────┘
```

FIG. 6

```
┌──────────────────────────────────────────────────────┐
│  ┌──────────────────┐       ┌──────────────────┐      │
│  │ Obtaining module │       │ Sampling module  │      │
│  │       701        │       │       704        │      │
│  └──────────────────┘       └──────────────────┘      │
│            │                          │               │
│         ┌──────────────────────────┐                  │
│         │   Processing module      │                  │
│         │           702            │                  │
│         └──────────────────────────┘                  │
│                     │                                  │
│         ┌──────────────────────────┐                  │
│         │   Assignment module      │                  │
│         │           703            │                  │
│         └──────────────────────────┘                  │
│                      700                               │
└──────────────────────────────────────────────────────┘
```

FIG. 7

System memory 830

ROM 831

BIOS 833

RAM 832

Operating system 834

Application program 835

Another program module 836

Program data 837

Processing unit 820

Video interface 890

Output interface 880

System bus 810

Display device 891

Output device 882

Unremovable non-volatile memory interface 840

Removable non-volatile memory interface 850

Input interface 860

Network interface 870

Hard disk memory 841

| Operating system 842 | Application program 843 | Another program module 844 | Program data 845 |
|---|---|---|---|

External memory 851

Input device 861

Remote computer 871

FIG. 8

EP 3 553 657 A1

# INTERNATIONAL SEARCH REPORT

International application No.

PCT/CN2017/106110

## A. CLASSIFICATION OF SUBJECT MATTER

G06F 9/50 (2006.01) i

According to International Patent Classification (IPC) or to both national classification and IPC

## B. FIELDS SEARCHED

Minimum documentation searched (classification system followed by classification symbols)

G06F 9/-

Documentation searched other than minimum documentation to the extent that such documents are included in the fields searched

Electronic data base consulted during the international search (name of data base and, where practicable, search terms used)

CNTXT; CNABS; DWPI; CKNI: 华为, 林宗芳, 朱冠宇, 曾艳, 分布式, 分派, 分配, 主导, 主要, 主, 资源, 份额, 作业, 任务, 剩余, 可用, 所剩, 碎片, 阈值, 大于, hadoop, yarn, spark, mesos, distribut+, resource, main, dominant, DRF, threshold, ratio, task, remain, more

## C. DOCUMENTS CONSIDERED TO BE RELEVANT

| Category* | Citation of document, with indication, where appropriate, of the relevant passages | Relevant to claim No. |
|---|---|---|
| A | CN 104881322 A (INSTITUTE OF COMPUTING TECHNOLOGY, CHINESE ACADEMY OF SCIENCES), 02 September 2015 (02.09.2015), entire document | 1-21 |
| A | US 2016350377 A1 (IBM), 01 December 2016 (01.12.2016), entire document | 1-21 |

☐ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 08 December 2017 | 22 December 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>SUN, Lei<br><br>Telephone No. (86-10) 62089291 |

Form PCT/ISA/210 (second sheet) (July 2009)

## INTERNATIONAL SEARCH REPORT
### Information on patent family members

| | International application No. |
|---|---|
| | PCT/CN2017/106110 |

| Patent Documents referred in the Report | Publication Date | Patent Family | Publication Date |
|---|---|---|---|
| CN 104881322 A | 02 September 2015 | None | |
| US 2016350377 A1 | 01 December 2016 | WO 2016193851 A1 | 08 December 2016 |
| | | US 2016350376 A1 | 01 December 2016 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611261962